# EUROPÄISCHE PATENTSCHRIFT

(11) **EP 1 841 615 B1**
(45) Veröffentlichungstag und Bekanntmachung des Hinweises auf die Patenterteilung: **05.11.2008**
(21) Anmeldenummer: 06700696.5
(22) Anmeldetag: 09.01.2006
(51) Int. Cl.: B60K 31/00

(54) **FAHRERASSISTENZSYSTEM MIT FAHRSCHLAUCHPRÄDIKTION**
DRIVER ASSISTANCE SYSTEM WITH DRIVING PATH PREDICTION
SYSTEME D'ASSISTANCE AU CONDUCTEUR A PREDICTION DE VOIE DE CONDUITE

(30) Priorität: 19.01.2005 DE 102005002504
(43) Veröffentlichungstag der Anmeldung: 10.10.2007
(73) Patentinhaber: ROBERT BOSCH GMBH, 70442 Stuttgart (DE)
(72) Erfinder: KLOTZ, Albrecht, 72631 Aichtal (DE); BRICHZIN, Volker, 71634 Ludwigsburg (DE)
(86) Internationale Anmeldenummer: PCT/EP2006/050091
(87) Internationale Veröffentlichungsnummer: WO 2006/077182

(56) Entgegenhaltungen:
- EP-A- 0 657 857
- DE-A- 10 018 558
- DE-A- 10 050 127
- DE-A- 10 118 903
- DE-A- 10 231 557

## Beschreibung

### Stand der Technik

Die Erfindung betrifft ein Fahrerassistenzsystem für Kraftfahrzeuge, mit einer Sensorik zur Erfassung des Verkehrsumfelds, einer Prädiktionseinrichtung zur Vorhersage eines Fahrschlauches, den das Fahrzeug voraussichtlich befahren wird, und einer Assistenzfunktion, die auf den prädizierten Fahrschlauch zurückgreift.

Bei Fahrerassistenzsystemen, die den Fahrer bei der Führung des Fahrzeugs unterstützen und/oder vor akuten Gefahren warnen, automatisch Maßnahmen zur Abwendung einer Kollisionsgefahr einleiten oder Sicherheitssysteme zur Vorbereitung auf die Kollision aktivieren, ist es häufig erforderlich, den voraussichtlichen Kurs des eigenen Fahrzeugs vorherzusagen. Ein typisches Beispiel eines solchen Fahrerassistenzsystems ist ein dynamischer Fahrgeschwindigkeitsregler (ACC; Adaptive Cruise Control), mit dem die Geschwindigkeit des eigenen Fahrzeugs automatisch auf die Geschwindigkeit eines vorausfahrenden Fahrzeugs geregelt wird, das mit Hilfe einer Radar- oder Lidar-Sensorik geortet wird. Die Fahrschlauchprädiktion dient dann vor allem zur Entscheidung, ob ein erfaßtes Objekt als Zielobjekt für die Abstandsregelung auszuwählen ist oder ob dieses Objekt ein irrelevantes Objekt, beispielsweise ein Fahrzeug auf einer Nebenspur ist. Der Fahrschlauch wird zum Beispiel durch ein geometrische Objekt repräsentiert, das durch eine der Trajektorie des Fahrzeugs entsprechende Mittellinie und eine bestimmte Fahrschlauchbreite definiert ist. Die Auswahl eines Zielobjektes erfolgt dann unter der Prämisse, daß nur Fahrzeuge innerhalb des Fahrschlauches für die Abstands- bzw. Geschwindigkeitsregelung relevant sind.

Solche ACC-Systeme sind bereits erfolgreich im Einsatz, doch beschränkt sich das Einsatzgebiet bisher zumeist auf Fahrten auf Autobahnen oder gut ausgebauten Landstraßen. In diesen Situationen kann man sich bei der Analyse des Verkehrsumfelds in der Regel auf bewegliche Ziele, beispielsweise auf vorausfahrende Fahrzeuge, beschränken, während Standziele, beispielsweise stehende Objekte am Fahrbahnrand, ignoriert werden können. Zur Vorhersage des Fahrschlauches wird bei solchen Systemen in erster Linie die aktuelle Fahrzeuggeschwindigkeit und die Gierrate des eigenen Fahrzeugs herangezogen. Anhand dieser Daten wird eine Fahrschlauchhypothese erstellt, indem die Mittellinie des Fahrschlauches mathematisch als Parabel beschrieben wird, deren Krümmung durch das Verhältnis von Gierrate und Fahrzeuggeschwindigkeit gegeben ist.

Es gibt Bestrebungen, den Einsatzbereich von ACC-Systemen auf andere Verkehrssituationen zu erweitern, beispielsweise Stop-and-Go-Situationen auf Autobahnen (Stauassistent), auf Fahrten auf Landstraßen und letztlich auch auf Fahrten im Stadtverkehr. In diesen Situationen, in denen generell auch Standziele berücksichtig werden müssen und somit die Auswahl von gültigen Zielobjekten und die Erkennung von Hindernissen wesentlich komplexer ist, werden auch an die Genauigkeit der Fahrschlauchprädiktion höhere Anforderungen gestellt.

Es ist bereits vorgeschlagen worden, für die Fahrschlauchprädiktion auch Daten aus anderen Informationsquellen heranzuziehen, beispielsweise die mit Hilfe des Radarsystems erfaßbare Kollektivbewegung anderer Fahrzeuge, Daten aus einem Navigationssystem, Ortungsdaten von Standzielen am Fahrbahnrand oder auch Informationen, die von einem Mono- oder Stereo-Videosystem geliefert werden und eine Bestimmung des Verfügbaren Verkehrsraumes gestatten.

Die Ergebnisse der Fahrschlauchprädiktion sind im übrigen nicht nur in herkömmlichen ACC-Systemen und fortgeschrittenen ACC-Systemen mit erweiterter Funktionalität verwendbar, sondern auch in anderen Assistenzsystemen, beispielsweise Warn- und/oder Sicherheitssystemen, bei denen ein drohender Aufprall des eigenen Fahrzeugs (auch als "Ego-Fahrzeug" bezeichnet) auf ein Hindernis erkannt werden muß.

Aus EP 0 657 857 A ist ein Fahrerassistenzsystem nach dem Oberbegriff des Anspruchs 1 bekannt, bei dem eine erste Fahrschlauchhypothese anhand der dynamischen Daten des eigenen Fahrzeugs und eine zweite Fahrschlauchhypothese anhand Positionsdaten eines georteten Objekts generiert wird.

### Vorteile der Erfindung

Die Erfindung mit den in Anspruch 1 angegebenen Merkmalen bietet den Vorteil, daß unterschiedlichen und ggf. auch situationsbedingt wechselnden Anforderungen an die Fahrschlauchprädiktion besser und schneller Rechnung getragen werden kann.

Erfindungsgemäß werden die verschiedenen Fahrschlauchhypothesen jeweils so konstruiert, daß sie unterschiedlichen denkbaren Verhaltensweisen des Fahrers entsprechen, und die Auswahl des prädizierten Fahrschlauches erfolgt dann aufgrund einer Erkennung und Analyse von Reaktionen des Fahrers, die auf seine Absichten schließen lassen, beispielsweise Lenkaktionen, Setzen des Fahrtrichtungsanzeigers und dergleichen.

Die nachgeschaltete Assistenzfunktion kann dann unter den mehreren Fahrschlauchhypothesen diejenige als prädizierten Fahrschlauch auswählen, die dem gegebenen Funktionszweck und/oder der gegebenen Situation am besten entspricht. Dies erleichtert nicht nur die Beherrschung von mehrdeutigen Situationen, etwa an Kreuzungen oder Weggablungen, sondern schafft vor allem auch die Möglichkeit, die verschiedenen Fahrschlauchhypothesen schärfer an den jeweiligen Funktionszweck bzw. an unterschiedliche charakteristische Situationen anzupassen, indem beispielsweise für jede der parallelen Fahrschlauchhypothesen unterschiedliche Informationsquellen, unterschiedliche Regeln zur Interpretation der Informationen und/oder unterschiedliche Regeln zur Konstruktion des Fahrschlauches benutzt werden. Die nachgeschaltete Assistenzfunktion wählt dann je nach Situation oder Funktionszweck die am besten geeignete Fahrschlauchhypothese aus und kann rasch auf eine andere Hypothese umschalten, falls sich die Situation oder der Betriebsmodus der Assistenzfunktion ändert.

Weiterhin besteht die vorteilhafte Möglichkeit, mehrere verschiedene Assistenzfunktionen auf einer gemeinsamen Sensorik und einer gemeinsamen Informationsbasis aufsitzen zu lassen, wobei die Prädiktionseinrichtung jeder Assistenzfunktion ein oder mehrere Fahrschlauchhypothesen zur Verfügung stellt, die speziell für diese Funktion bestimmt sind.

Vorteilhafte Ausgestaltungen und Weiterbildungen der Erfindung ergeben sich aus den Unteransprüchen.

Zum Beispiel ist im Rahmen einer erweiterten, auch für den Stadtverkehr geeigneten ACC-Funktion neben einem Standard-Betriebsmodus auch ein spezieller Betriebsmodus denkbar, der automatisch oder durch Fahrerbefehl dann aktiviert wird, wenn Hindernisse, die nur einen Teil der eigenen Fahrspur versperren, beispielsweise Radfahrer oder stehende Fahrzeuge am Fahrbahnrand, überholt oder umfahren werden sollen. In diesem Fall wird der Fahrschlauch so konstruiert, daß er dem zu erwartenden Ausweichmanöver des Fahrers Rechnung trägt. Dieser Betriebsmodus kann deshalb auch als "ACC-Fahrt im verfügbaren Verkehrsraum" bezeichnet werden.

Die Fahrschlauchhypothese, die die Prädiktionseinrichtung für die ACC-Fahrt im verfügbaren Verkehrsraum bereitstellt, läßt sich in gleicher oder ähnlicher Form auch für einen Stauassistenten nutzen, der in demselben Assistenzsystem implementiert ist. Denkbar ist auch, daß parallel zu der Assistenzfunktion oder dem Stauassistenten noch eine Warn- oder Sicherheitsfunktion läuft, beispielsweise eine sogenannte Pre-Crash-Funktion, die ebenfalls auf die Fahrschlauchhypothese für die ACC-Fahrt im verfügbaren Verkehrssraum oder eine leicht modifizierte Fahrschlauchhypothese zurückgreift.

Gemäß einer vorteilhaften Weiterbildung der Erfindung werden nicht nur parallele Fahrschlauchhypothesen bereitgestellt, sondern auch die weitere Auswertung erfolgt weitgehend parallel. Zum Beispiel kann bei einem ACC-System die Plausibilisierung der Objekte, die Zuordnung der Objekte zum Fahrschlauch, sowie die Auswahl des Zielobjekts und ggf. auch die Erstellung eines entsprechenden Regelvorschlags für die Abstandsregelung nach Fahrschlauchhypothesen gesondert und parallel durchgeführt werden, so daß die Entscheidung für die eine oder andere Hypothese erst bei Umsetzung des Regelvorschlags erfolgt. Dies hat den Vorteil, daß das Regelsystem gleichsam stets auf alle Eventualitäten vorbereitet ist.

Besonders zweckmäßig ist die parallele Verfolgung mehrerer Fahrschlauchhypothesen in den Fällen, in denen die Erstellung dieser Hypothesen auf Informationen beruht, die sich auf Vorgänge in der Vergangenheit beziehen. So werden beispielsweise im Rahmen einer ACC-Funktion die Trajektorien der georteten Objekte über einen längeren Zeitraum verfolgt. Unter der Annahme, daß dort, wo sich ein anderes Fahrzeug bewegt hat, auch ein möglicher Kurs für das eigene Fahrzeug vorhanden sein muß, lassen sich die so verfolgten Trajektorien zur Erstellung von Fahrschlauchhypothesen nutzen. Allerdings setzt dies voraus, daß die Trajektorie bereits für eine gewisse Zeit verfolgt wurde. Wenn mehrere Fahrschlauchhypothesen parallel geführt werden, ergibt sich somit der Vorteil, daß die benötigten Informationen bei Bedarf sofort zur Verfügung stehen. Dies gilt nicht nur für die Verfolgung von Trajektorien, sondern beispielsweise auch bei der Interpretation von anderen Infrastrukturdaten, beispielsweise von Fahrbahnmarkierungen, die mit Hilfe eines Videosystems geortet wurden, und dergleichen. Auch bei der Interpretation und Plausibilisierung solcher Objekte wird häufig auf die Historie zurückgegriffen, beispielsweise um die Stabilität der Objektortung bewerten zu können.

### Zeichnung

Ein Ausführungsbeispiel sowie Funktionsbeispiele der Erfindung sind in den Zeichnungen dargestellt und in der nachstehenden Beschreibung näher erläutert.

Es zeigen:
- Figur 1: ein Blockdiagramm eines Fahrerassistenzsystems;
- Figuren 2 und 3: Diagramme zur Erläuterung unterschiedlicher Funktionsweisen des Systems; und
- Figur 4: ein Ablaufdiagamm für ein spezielles Ausführungsbeispiel.

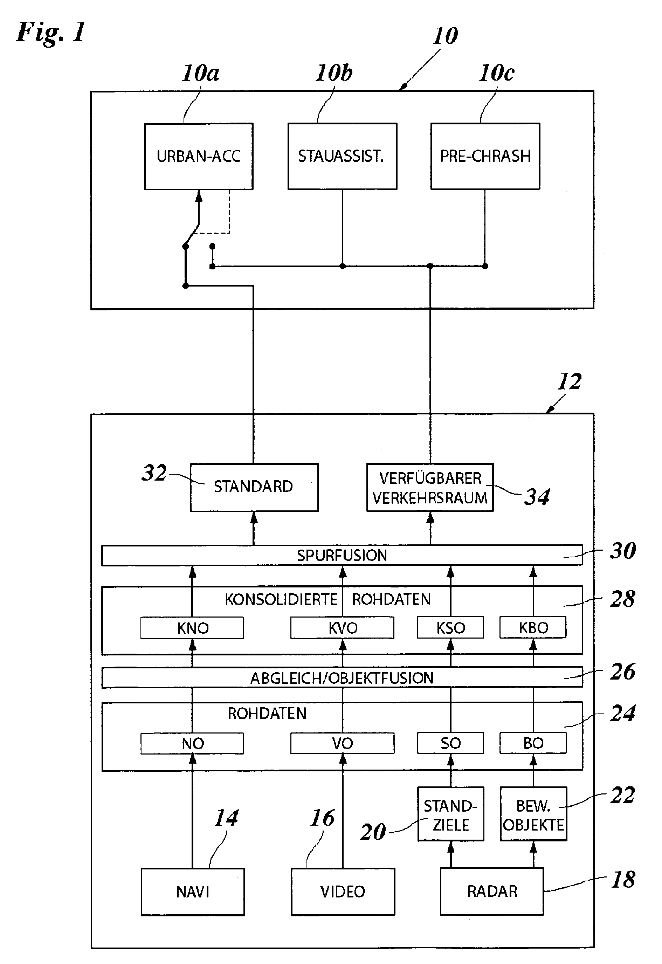

Figur 1 zeigt ein Fahrerassistenzsystem, in dem unterschiedliche Assistenzfunktionen 10a, 10b und 10c implementiert sind, beispielsweise eine URBAN-ACC-Funktion, ein Stauassistent und ein Warn- und Sicherheitssystem. Der Ausdruck "URBAN ACC" gibt an, daß das System auch für den Stadtverkehr geeignet sein soll. Das Fahrerassistenzsystem 10 wird in bekannter Weise durch einen oder mehrere Mikrorechner und zugehörige Software gebildet und ist deshalb nur vereinfacht als Block dargestellt. Auch die zugehörige Sensorik ist in Figur 1 nicht näher gezeigt. Lediglich die Funktionen des Systems, die sich auf die Fahrschlauchprädiktion beziehen, sind als gesonderter Block 12 herausgezogen.

Für die Fahrschlauchprädiktion stehen im gezeigten Beispiel die folgenden Informationsquellen zur Verfügung: ein Navigationssystem 14, das z. B. Information über die Fahrbahnkrümmung, über Kreuzungen und dgl. liefert, ein Videosystem 16 und ein Radarsystem 18, das auch die Daten für die Abstandsregelung im Rahmen der ACC-Funktion liefert. Das Radarsystem 18 ortet sowohl Standziele 20 als auch bewegliche Objekte 22. Die entsprechenden Ortungsdaten werden auf unterschiedliche Weise ausgewertet, so daß die Standziele und die beweglichen Objekte hier als unterschiedliche Informationsquellen behandelt werden.

Aus den insgesamt vier Informationsquellen werden Rohdaten 24 extrahiert. Diese Rohdaten 24 werden mathematisch repräsentiert als geometrische Objekte in einem einheitlichen zweidimensionalen Koordinatensystem. Diese Objekte sind je nach Informationsquelle mit NO, VO, SO, BO bezeichnet. In einer als "Abgleich/Objektfusion" bezeichneten Verfahrensstufe 26 werden die Rohdaten interpretiert und miteinander abgeglichen, um etwaige Widersprüche festzustellen und soweit möglich zu beseitigen und Ungenauigkeiten zu korrigieren, die durch die Natur der jeweiligen Informationsquelle bedingt sind. Dabei können z. B. auch Einzelojekte, die vom Videosystem erkannt wurden, mit entsperechenden Radarzielen identifiziert werden (Objektfusion). Außerdem erfolgt hier eine Plausibilisierung der erkannten Objekte, in der Regel unter Rückgriff auf die Historie, d. h. auf frühere Daten, die demselben Objekt zuzuordnen sind. Auf diese Weise erhält man konsolidierte Rohdaten 28, die mit KNO, KVO, KSO und KBO bezeichnet sind. Typischerweise repräsentieren diese Daten Linienobjekte wie z. B. den Verlauf von Mittelstreifen und Randmarkierungslinien auf der Fahrbahn (KVO, aus den Videodaten abgeleitet), Fahrbahnränder, die aus Serien von Standzielen abgeleitet sind (KSO, erhalten durch Fusion von Radar- und Videodaten), und Fahrzeugtrajetktorien (KBO, abgeleitet aus Radar- und ggf. Videodaten).

In einem Schritt 30 "Spurfusion" werden dann die Rohdaten für einander entsprechende Linienobjekte zusammengeführt, indem aus den Parametern und Koeffizienten, die die einzelnen Linienobjekte beschreiben, neue synthetische Linienobjekte generiert werden, die jeweils einer Fahrschlauchhypothese 32, 34 entsprechen. Im gezeigten Beispiel sind der Einfachheit halber nur zwei Fahrschlauchhypothesen gezeigt, doch kann ihre Anzahl auch größer sein.

Beim Abgleich und bei der Interpretation der Rohdaten und bei der Fusion dieser Daten werden für die beiden Fahrschlauchhypothesen 32 und 34 jeweils andere Kriterien und Regeln verwendet, die speziell an den jeweiligen Funktionszweck angepaßt sind.

Die Regeln für die Fahrschlauchhypothese 32 entsprechen einer standardmäßigen ACC-Funktion (Assistenzfunktion 10a) und beruhen auf der Annahme, daß der Fahrschlauch annähernd der gesamten Breite der aktuell oder voraussichtlich von dem Ego-Fahrzeug befahrenen Fahrspur entspricht.

Die Regeln für die Fahrschlauchhypothese 34 sind an eine ACC-Fahrt im verfügbaren Verkehrsraum angepaßt und bruhen demgemäß auf der Annahme, daß bei Hindernissen, die die aktuelle oder voraussichtliche Fahrspur nicht vollständig sperren, sondern lediglich etwas verengen, der Fahrschlauch so verlagert und ggf. verengt wird, daß er einer Umfahrung des Hindernisses innerhalb der eigenen Fahrspur entspricht. Diese Fahrschlauchhypothese 34 wird allen drei Assistenzfunktionen 10a, 10b und 10c zur Verfügung gestellt. Der Assistenzfunktion 10a "Urban-ACC" stehen somit beide Fahrschlauchhypothesen 32 und 34 zur Auswahl.

Für eine Standard-ACC-Fahrt gilt die Annahme, daß der Fahrer bei der Längsführung des Fahrzeugs, also beim Beschleunigen und/oder Bremsen, unterstützt werden möchte und demzufolge das Ego-Fahrzeug komfortabel in Längsrichtung geregelt werden muß. In die Querführung des Fahrzeugs wird der Fahrer nur zum Halten der Spur und bei Spurwechselmanövern eingreifen.

Im Gegensatz dazu gilt für den Stauassistenten 10b, der beispielsweise bei einem Stau auf einer Autobahn automatisch aktiv wird oder vom Fahrer aktiviert wird, daß der Fahrer schnell und komfortabel durch den Stau geleitet werden möchte, wobei der Fahrer auch bereit ist, Überholmanöver innerhalb der eigenen Spur bei versetzt fahrenden Fahrzeugen durchzuführen. Das gleiche gilt in spezifischen Situationen auch für die Urban-ACC-Funktion, nämlich z.B. bei versetzt fahrenden Fahrzeugen am rechten Fahrbahnrand (z.B. Fahrradfahrer), die innerhalb der Stadt vorzugsweise überholt werden sollen. In solchen Fällen erwartet der Fahrer, daß das Urban-ACC-System bzw. der Stauassistent auf die versetzt fahrenden Fahrzeuge nicht reagiert, sofern genügend verfügbarer Verkehrsraum zum komfortablen Überholen oder Umfahren vorhanden ist.

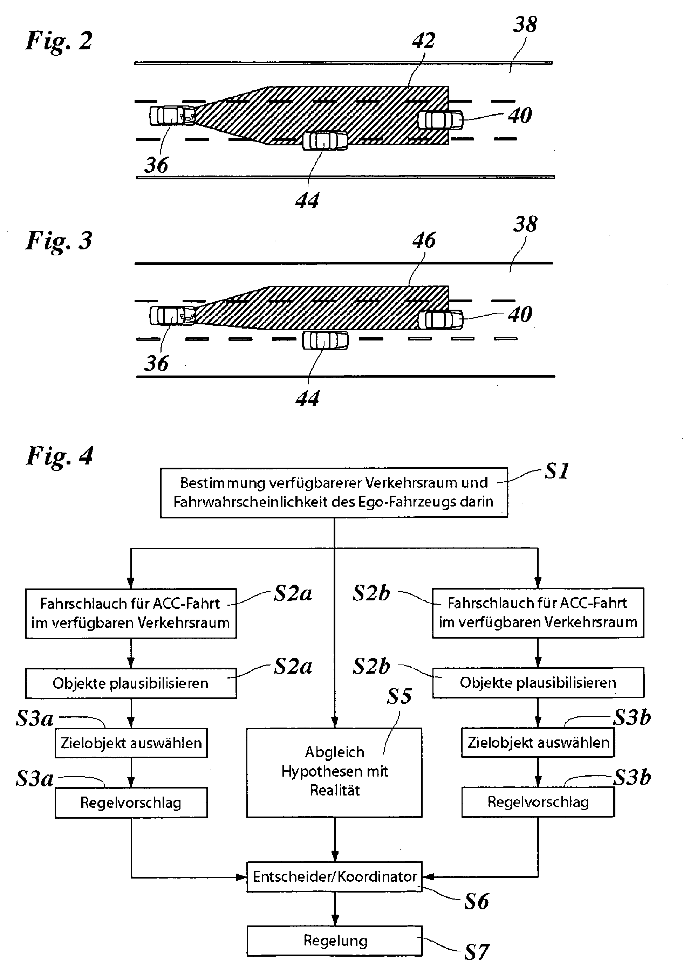

Die unterschiedlichen Fahrererwartungen und Fahrschlauchkonstruktionen sind in Figuren 2 und 3 illustriert.

In Figur 2 ist das Ego-Fahrzeug 36, das mit dem Fahrerassistenzsystem 10 sowie mit einer zugehörigen Sensorik in der Form einer Videokamera und eines Radarsensors ausgerüstet ist, auf der mittleren Spur einer dreispurigen Fahrbahn 38 dargestellt. Im Rahmen der Standard-ACC-Funktion wird ein vorausfahrendes Fahrzeug 40 verfolgt. Folglich erfolgt die Prädiktion eines Fahrschlauches 42 auf der Grundlage der Fahrschlauchhypothese 32. Der Fahrschlauch 32 erstreckt sich mindestens über die gesamte Breite der Fahrspur des Eco-Fahrzeugs 36 und erfaßt deshalb auch ein Fahrzeug 44, das am rechten Fahrbahnrand steht, jedoch teilweise in die mittlere Spur hineinragt. Die ACC-Funktion wird deshalb das Fahrzeug 44 als relevantes Objekt orten und eine entsprechende Verzögerung und ggf. ein Anhalten des Ego-Fahrzeugs 36 veranlassen.

Zum Vergleich illustriert Figur 3 die Konstruktion eines Fahrschlauches 46, der auf der Fahrschlauchhypothese 34 basiert und für eine ACC-Fahrt im verfügbaren Verkehrsraum vorgesehen ist. Der Fahrschlauch 46 ist so eingeschränkt, daß das Fahrzeug 44 nun vollständig außerhalb dieses Fahrschlauches liegt und nicht mehr als relevantes Objekt behandelt wird. Dies entspricht der Erwartung, daß der Fahrer das Fahrzeug 44 zu umfahren gedenkt, ohne dabei im wesentlichen die eigene Spur zu verlassen. In einer Stausituation wäre dies eine angemessene Reaktion.

Im Stadtverkehr, also bei aktivem Urban-ACC, kann das Umfahren von Hindernissen innerhalb der eigenen Fahrspur manchmal eine angemessene Reaktion sein, z.B. beim Überholen eines Fahrradfahrers, es kann jedoch in anderen Situationen auch unangebracht sein, etwa beim Auffahren auf ein Ende einer Ampelschlange, das durch einen Motorradfahrer gebildet wird. Im Rahmen der Assistenzfunktion 10a muß deshalb zu einem geeigneten Zeitpunkt entschieden werden, welche der beiden Fahrschlauchhypothesen 32, 34 der Regelung zugrundegelegt werden soll. Ein Ablaufdiagamm hierfür ist in Figur 4 dargestellt.

In Schritt S1 wird anhand der Daten des Navigationssystems 14, des Videosystems 16 und des Radarsystems 18 der verfügbare Verkehrsraum bestimmt, ebenso die Wahrscheinlichkeit dafür, daß das Ego-Fahrzeug die eine oder ander der zur Verfügung stehenden Routen einschlagen wird. In Schritten S2a und S2b werden dann parallel die beiden Fahrschlauchhypothesen 32 und 34 berechnet und verfolgt. In Schritten S3a und S3b werden für jede Fahrschlauchhypothese die georteten Objekte plausibilisiert, d.h. es wird jeweils entschieden, welche Objekte sich innerhalb des Fahrschlauches befinden. In Schritten S3a und S3b wird dann jeweils unter den plausibilisierten Objekten ein Zielobjekt ausgewählt, und in Abhängigkeit von den Ortungsdaten dieses Zielobjekts werden in Schritten S4a und S4b zwei alternative Regelvorschläge berechnet. Unterdessen werden in Schritt S5 die Hypothesen über das voraussichtliche Verhalten des Fahrers mit der Realität abgeglichen. Beispielsweise wird dazu anhand der Gierrate des Ego-Fahrzeugs festgestellt, ob der Fahrer zu einem Lenkmanöver zum Umfahren des Hindernisses ansetzt oder nicht. Gegebenenfalls können hier auch andere Kriterien berücksichtigt werden, etwa das Vorhandensein und/oder die Trajektorien anderer Objekte wie z.B. eines Pkw vor dem am Ende der Ampelschlange haltenden Motorradfahrer. Auf dieser Grundlage wird dann in Schritt S6 eine Entscheidung zugunsten des einen oder anderen Regelvorschlags getroffen, und in Schritt S7 wird der entsprechende Regelvorgang eingeleitet. Der Schritt S6 arbeitet dabei vorzugsweise mit einer gewissen Hysterese, so daß in Zweifelsfällen ein häufiger Wechsel zwischen gegensätzlichen Entscheidungen vermieden wird.

## Patentansprüche

1. Fahrerassistenzsystem für Kraftfahrzeuge (36), mit einer Sensorik (16, 18) zur Erfassung des Verkehrsumfelds, einer Prädiktionseinrichtung (12) zur Vorhersage eines Fahrschlauches (42, 46), den das Fahrzeug (36) voraussichtlich befahren wird, und einer Assistenzfunktion (10a, 10b, 10c), die mindestens eine Funktion (ACC) zur dynamischen Geschwindigkeitsregelung umfaßt und auf den prädizierten Fahrschlauch zurückgreift, wobei die Prädiktionseinrichtung (12) dazu ausgebildet ist, mehrere Fahrschlauchhypothesen (32, 34) zeitgleich zu verfolgen und der Assistenzfunktion (10a, 10b, 10c) zur Verfügung zu stellen, und die mehreren Fahrschlauchhypothesen (32, 34) anhand von Kriterien und/oder Regeln generiert werden, die sich für die zeitgleich verfolgten Fahrschlauchhypothesen voneinander unterscheiden, **dadurch gekennzeichnet, daß** die Kriterien und und Regeln für eine Fahrschlauchhypothese (32) auf der Annahme beruhen, daß der Fahrer jedes auf der eigenen Fahrspur geortete Objekt als Hindernis bewertet wissen möchte, während die Kriterien und Regeln für eine andere Fahrschlauchhypothese (34) auf der Annahme beruhen, daß der Fahrer beabsichtigt, das Hindernis, soweit möglich, innerhalb der eigenen Fahrspur zu umfahren.

2. Fahrerassistenzsystem nach Anspruch 1, **dadurch gekennzeichnet, daß** die Assistenzfunktion einen Stauassistenten (10b) umfaßt, und daß die Kriterien und Regeln für die Erstellung der Fahrschlauchhypothese (34) für diesen Stauassistenten auf der Annahme beruhen, daß der Fahrer beabsichtigt, Hindernisse unter Ausnutzung des verfügbaren Verkehrsraumes zu umfahren.

3. Fahrerassistenzsystem nach einem der vorstehenden Ansprüche, **dadurch gekennzeichnet, daß** die Prädiktionseinrichtung (12) mehrere in dem Fahrerassistenzsystem implementierte Assistenzfunktionen (10a, 10b, 10c) mit je einer oder oder mehreren Fahrschlauchhypothesen (32, 34) bedient.

4. Fahrerassistenzsystem nach einem der vorstehenden Ansprüche, **dadurch gekennzeichnet, daß** die Assistenzfunktion (10a) dazu ausgebildet ist, die mehreren Fahrschlauchhypothesen (32, 34) parallel weiter zu verarbeiten und erst auf einer späteren Verarbeitungsstufe eine Entscheidung für ein Verarbeitungsergebnis zu treffen, das auf einer der Fahrschlauchhypothesen beruht.

5. Fahrerassistenzsystem nach einem der vorstehenden Ansprüche, **dadurch gekennzeichnet, daß** die Prädiktionseinrichtung (12) dazu ausgebildet ist, Daten zu verarbeiten, die von der Sensorik (16, 18) geliefert werden, und bei einer Interpretation dieser Daten zur Erstellung der Fahrschlauchhypothesen (32, 34) auf die Historie dieser Daten zurückzugreifen.

## Claims

1. Driver assistance system for motor vehicles (36), having a sensor system (16, 18) for sensing the traffic environment, a prediction device (12) for predicting a driving tube (42, 46) which the vehicle (36) is expected to travel along, and an assistance function (10a, 10b, 10c) which comprises at least one function (ACC) for dynamic cruise control and which makes use of the predicted driving tube, in which case the prediction device (12) is designed to follow a plurality of driving tube hypotheses (32, 34) simultaneously and to make them available to the assistance function (10a, 10b, 10c), and the plurality of driving tube hypotheses (32, 34) are generated on the basis of criteria and/or rules which differ from one another for the simultaneously followed driving tube hypotheses, **characterized in that** the criteria and rules for a driving tube hypothesis (32) are based on the assumption that the driver would like to be certain that any object located in the driver's own lane is evaluated as an obstacle, while the criteria and rules for another driving tube hypothesis (34) are based on the assumption that the driver intends, as far as possible, to drive around the obstacle within his own lane.

2. Driver assistance system according to Claim 1, **characterized in that** assistance function comprises a traffic jam assistant, (10b), and **in that** the criteria and rules for creating the driving tube hypothesis (34) for this traffic jam assistant are based on the assumption that the driver intends to drive around obstacles by utilizing the available traffic space.

3. Driver assistance system according to one of the preceding claims, **characterized in that** the prediction device (12) provides a plurality of assistance functions (10a, 10b, 10c) which are implemented in the driver assistance system with, in each case, one or more driving tube hypotheses (32, 34).

4. Driver assistance system according to one of the preceding claims, **characterized in that** the assistance function (10a) is designed to process further the plurality of driving tube hypotheses (32, 34) in parallel, and to make a decision for a processing result based on one of the driving tube hypotheses only at a later processing stage.

5. Driver assistance system according to one of the preceding claims, **characterized in that** the prediction device (12) is designed to process data which are supplied by the sensor system (16, 18), and to access the history of these data when interpreting said data in order to create the driving tube hypotheses (32, 34).

## Revendications

1. Système d'assistance au conducteur pour des véhicules automobiles (36) comprenant des capteurs (16, 18) pour saisir le champ environnant, une installation de prévision (12) pour prévoir un couloir de conduite (42, 46) que le conducteur du véhicule (36) utilisera probablement et une fonction d'assistance (10a, 10b, 10c) qui comporte au moins une fonction (ACC) pour la régulation dynamique de la vitesse et qui utilise le couloir de conduite prévisionnel,
l'installation de prévision (12) étant réalisée pour suivre dans le temps plusieurs hypothèses de couloirs de conduite (32, 34), assurer la fonction d'assistance (10a, 10b, 10c) et générer les différentes hypothèses de couloirs de conduite (32, 34) à l'aide de critères et/ou de règles qui se distinguent respectivement pour les hypothèses de couloir de conduite suivies simultanément,
**caractérisé en ce que**
les critères et les règles pour une hypothèse de couloirs de conduite (32) reposent sur l'hypothèse que le conducteur souhaiterait voir exploité comme obstacle, tout objet localisé sur sa propre voie de circulation alors que les critères et les règles pour d'autres hypothèses de couloirs de circulation (34) reposent sur la supposition que le conducteur a l'intention de contourner l'obstacle en restant si possible à l'intérieur de sa propre voie de circulation.

2. Système d'assistance au conducteur selon la revendication 1,
**caractérisé en ce que**
la fonction d'assistance comprend un assistant de bouchon de circulation (10b), et
les critères et les règles d'établissement des hypothèses de bouchon de circulation (34) pour ces assistants de conduite reposent sur l'hypothèse que le conducteur a l'intention de contourner les obstacles en utilisant l'espace de circulation disponible.

3. Système d'assistance au conducteur selon au moins l'une des revendications précédentes,
**caractérisé en ce que**
l'installation de prévision (12) utilise plusieurs fonctions d'assistance (10a, 10b, 10c) implémentées dans l'assistance de conduite avec une ou plusieurs hypothèses de couloirs de conduite (32, 34).

4. Système d'assistance au conducteur selon l'une des revendications précédentes,
**caractérisé en ce que**
la fonction d'assistance (10a) est réalisée pour permettre à plusieurs hypothèses de couloir de conduite (32, 34) de continuer à être travaillées en parallèle et que seulement dans un niveau de traitement ultérieur, on prend une décision pour un résultat de traitement reposant sur l'une des hypothèses de couloir de conduite.

5. Système d'assistance au conducteur selon l'une des revendications précédentes,
**caractérisé en ce que**
l'installation de prévision (12) est conçue pour traiter des données fournies par les capteurs (16, 18) et qui peut utiliser l'établissement de l'hypothèse de couloir de conduite (32,34) en fonction de l'historique de ces données.pour l'interprétation de ces données.
